# FASCICULE DE BREVET EUROPEEN

(11) **EP 2 849 303 B1**
(45) Date de publication et mention de la délivrance du brevet: **11.05.2016**
(21) Numéro de dépôt: 14183815.1
(22) Date de dépôt: 05.09.2014
(51) Int. Cl.: H02J 3/14

(54) **Procédé de régulation de la puissance consommée sur un réseau électrique et entité de pilotage de la consommation sur ce réseau électrique**
Verfahren zur Regulierung des Stromverbrauchs in einem Stromnetz, und Steuereinheit für den Verbrauch in diesem Stromnetz
Method for controlling the power consumed over an electrical network and entity for monitoring consumption on said electrical network

(30) Priorité: 06.09.2013 FR 1358569
(43) Date de publication de la demande: 18.03.2015
(73) Titulaire: Energy Pool Developpement, 73370 Le Bourget-du-Lac (FR)
(72) Inventeur: Duchatel, Jean-Pierre, 38050 Grenoble Cedex 09 (FR); Petit Halajda, Stéphanie, 38050 Grenoble Cedex 09 (FR)
(74) Mandataire: Myon, Gérard Jean-Pierre

(56) Documents cités:
- EP-A1- 1 372 238
- FR-A1- 2 937 473
- US-B1- 6 487 509

## Description

La présente invention concerne un procédé de régulation de la puissance consommée sur un réseau électrique et une entité de pilotage de la consommation d'une pluralité de consommateurs de courant électrique présélectionnés sur ce réseau électrique.

Etant donné les difficultés économiques et techniques à stocker l'électricité en grande quantité, il est nécessaire de maintenir en permanence l'égalité entre la consommation et la production d'électricité sur le réseau électrique. Afin de garantir l'adaptation de l'offre à la demande à tout instant, une gestion rigoureuse et continue des charges de consommation et des programmes de production est indispensable : c'est l'enjeu premier de la conduite du réseau. Le recours à des moyens de production intermittents de type énergie renouvelable (éolien, solaire) et la thermo-sensibilité de certains usages (chauffage électrique, climatisation..) renforcent la criticité de cette gestion de l'équilibre entre la production et la consommation à certaines périodes de l'année et/ou certains moments de la journée.

Pour assurer la régulation de la consommation et de la production, et répondre à une variation rapide de l'offre ou de la demande, l'entité en charge de la conduite du réseau, également appelée gestionnaire de réseau, dispose de réserves de puissance mobilisables. On distingue trois types de réserves de puissance mobilisables : une réserve primaire, une réserve secondaire, et une réserve tertiaire.

Il est important de noter que ce qui est qualifié de réserve de puissance ci-dessus et par la suite ne correspond pas à un stockage d'énergie, mais à des capacités de productions supplémentaires de certains sites producteurs d'électricité ou à des capacités de baisse de consommation assurées par une réduction de la puissance consommée par certains consommateurs d'électricité, pouvant être mises en oeuvre en cas de besoin avéré.

La réserve primaire est la réserve de puissance dont le temps de réponse est le plus court, c'est à dire inférieur à 30 secondes. Elle est activée de manière automatique et continue sur la base de la variation de la fréquence du réseau. Les groupes de production ou sites de consommation d'électricité participant à cette réserve adaptent leur puissance fournie / consommée en fonction de l'écart entre la fréquence du réseau et une fréquence de consigne, par exemple égale à 50 Hz pour la France.

La réserve secondaire est globalement similaire à la réserve primaire, mais est activable dans un délai supérieur, de l'ordre de plusieurs minutes. La réserve secondaire, également automatique, agit après la réserve primaire et a pour but de rétablir la fréquence du réseau à la fréquence de consigne. Elle est gérée de manière centralisée par l'entité en charge de la conduite du réseau.

Enfin la réserve tertiaire intervient lorsque la réserve secondaire disponible est insuffisante. Contrairement aux réserves primaire et secondaire qui sont des automatismes, la réserve tertiaire est mise en oeuvre manuellement par l'entité en charge de la conduite du réseau dans un délai généralement inférieur à 15 minutes.

Il apparait ainsi, que le réseau intègre des surcapacités de production d'électricité qui sont soit mises en oeuvre uniquement pendant des périodes de forte consommation et de forte demande en énergie électrique, soit mobilisées sous forme de réserves de puissance disponibles à tout moment pour assurer l'équilibre du réseau, c'est-à-dire, par exemple, qu'un site producteur d'électricité limite sa production d'électricité afin d'être apte à fournir une réserve de puissance à tout moment. La mobilisation de ces surcapacités engendre des coûts importants pour le producteur et le distributeur. C'est pourquoi différentes solutions ont déjà été proposées pour assurer une réduction de la puissance consommée par certains consommateurs.

FR-A-2 937 473 décrit ainsi une entité de régulation de la consommation électrique sur le réseau, cette entité exerçant une série d'action individuelle sur différents consommateurs présélectionnés, en fonction de paramètres transmis par les consommateurs présélectionnés, tels que la valeur maximale acceptable pour la réduction de puissance.

De plus, à l'heure actuelle et dans la majorité des pays du monde, la participation aux différentes réserves décrites ci-dessus est principalement le fait des producteurs d'électricité. Afin de dynamiser le marché des différentes réserves, et de favoriser la protection de l'environnement, il peut être intéressant de promouvoir la participation des consommateurs aux différentes réserves. Ainsi, en réduisant ou modifiant leur consommation conformément aux consignes des entités en charge de la conduite du réseau, les consommateurs peuvent contribuer auxdites réserves et ainsi, concurrencer ou remplacer les offres des producteurs d'électricité.

Cependant, il s'avère que la participation à la plupart des réserves, et notamment primaires voire secondaires, dans la mesure où elle implique un délai de réaction très court de la part de l'entité fournissant des réserves, est difficile et coûteuse à mettre en oeuvre pour un consommateur.

C'est à ces inconvénients qu'entend plus particulièrement remédier l'invention en proposant une entité de pilotage et un procédé de régulation de la puissance consommée sur un réseau électrique permettant de réduire la puissance consommée de certains consommateurs de manière rapide, fiable et économique.

A cet effet, l'invention a pour objet un procédé de régulation de la puissance consommée sur un réseau électrique, le réseau électrique étant propre à alimenter une pluralité de consommateurs de courant électrique, des consommateurs présélectionnés étant aptes à accepter une diminution prédéterminée de puissance sur une plage de temps prédéterminée. Conformément à l'invention, le procédé comprend les étapes suivantes :
- l'émission à une entité de pilotage, de manière régulière et par chaque consommateur présélectionné, d'un message contenant la puissance consommée dudit consommateur présélectionné, la durée entre deux émissions de message successives pour un consommateur donné étant inférieure à 1 heure, de préférence inférieure à 10 minutes, de préférence encore inférieure à 1 minute,
- le calcul, par l'entité de pilotage, d'une valeur maximale de réduction de puissance pour l'ensemble de consommateurs présélectionnés et d'une durée maximale de cette réduction de puissance, ladite valeur maximale étant calculée en fonction des valeurs reçues de puissance consommée pour chaque consommateur présélectionné,
- la transmission, par l'entité de pilotage et à destination d'un gestionnaire de réseau, des valeur et durée maximales de réduction de puissance calculées,
- l'envoi, par le gestionnaire de réseau à l'entité de pilotage, d'un ordre de commande d'une réduction de puissance pendant une durée sélectionnée, la valeur de la réduction de puissance commandée étant inférieure ou égale à la valeur maximale de réduction de puissance calculée et la durée sélectionnée étant inférieure ou égale à la durée maximale de réduction de puissance calculée.

Selon des aspects avantageux de l'invention, le procédé de régulation de la puissance consommée sur un réseau électrique comprend en outre une ou plusieurs des caractéristiques suivantes, prises isolément ou selon toutes les combinaisons techniquement admissibles :
- l'entité de pilotage est distincte du gestionnaire de réseau, l'entité de pilotage étant de préférence propre à communiquer avec le gestionnaire de réseau via le réseau Internet ;
- lors de l'étape de calcul, l'entité de pilotage calcule une durée minimale de réduction de puissance et lors de l'étape de transmission, ladite durée minimale est transmise au gestionnaire de réseau, alors que lors de l'étape d'envoi, la durée sélectionnée est comprise entre la durée minimale et la durée maximale de réduction de puissance calculées ;
- lors de l'étape d'émission, la puissance consommée émise est une puissance instantanée ou moyennée ;
- l'ordre de commande de la réduction de puissance est exécuté par l'entité de pilotage dès la réception de cet ordre, alors que le délai entre l'envoi de l'ordre et la réduction de la puissance des consommateurs présélectionnés est inférieur à 1 minute, de préférence inférieur à 30 secondes, de préférence encore inférieur à 5 secondes ;
- le réseau électrique est propre à alimenter une pluralité de zones géographiques distinctes, et les consommateurs présélectionnés sont regroupés par zone géographique, alors que, lors de l'étape de calcul, les valeur et durée maximales de réduction de puissance sont calculées pour chacune des zones géographiques et que, lors de l'étape d'envoi de l'ordre de commande, l'ordre de commande de la réduction de puissance est spécifique à une ou des zones géographiques ;
- lors de l'étape de calcul, l'entité de pilotage réalise les étapes suivantes :
   a) le traitement des messages émis par chaque consommateur présélectionné,
   b) la vérification que la réduction de puissance offerte par les consommateurs présélectionnés est, pour chaque zone géographique, supérieure ou égale à une valeur prédéterminée de réduction de puissance,
   c) l'activation d'un signal d'alerte sur un terminal de l'entité de pilotage et l'augmentation du nombre de consommateurs présélectionnés pour une zone géographique donnée si la réduction de puissance offerte par les consommateurs précédemment présélectionnés pour ladite zone géographique est inférieure à la valeur prédéterminée de réduction de puissance, puis le retour à l'étape de vérification,
   d) la génération d'un fichier de décision comprenant les valeur et durée maximales de réduction de puissance calculées ;
- lors du traitement des messages émis par chaque consommateur présélectionné, l'entité de pilotage calcule, pour chaque consommateur présélectionné, la réduction de puissance et la durée de cette réduction de puissance, en fonction de la valeur de puissance consommée et des paramètres suivants:
   - la valeur de la diminution prédéterminée de puissance,
   - le nombre maximum de réductions autorisées de la puissance sur une période de temps prédéterminée,
   - le nombre de réductions de puissance réalisées depuis le début d'une période de temps prédéterminée,
   - le délai minimum entre deux réductions successives de la puissance,
   - la plage de temps prédéterminée de la réduction de la puissance,
   - le délai minimum de mise en oeuvre de la réduction de la puissance,
   - le calendrier de disponibilité du consommateur ;
- chaque consommateur présélectionné comprend un ou plusieurs sous-consommateurs alors que, lors de l'étape d'émission, la puissance consommée émise, via le message, par chaque consommateur présélectionné est égale à la somme des puissances consommées par les sous-consommateurs correspondants, et le message comprend également la puissance consommée par chaque sous-consommateur ;
- lors de l'étape de calcul, l'entité de pilotage calcule, pour chaque consommateur présélectionné, plusieurs valeurs de réduction de puissance pendant une durée maximale, les valeurs calculées étant égales à des pourcentages respectifs de la valeur maximale de réduction de puissance et correspondant à des réductions de puissance consommée par chaque sous-consommateur ou des regroupements de sous-consommateurs , alors que lors de l'étape de transmission, l'entité de pilotage transmet les différentes valeurs de réduction de puissance calculées et les durées maximales correspondantes, et lors de l'étape d'envoi, la valeur de la réduction de puissance commandée est égale à l'une des valeurs transmises par l'entité de pilotage ;
- lors de l'étape de calcul, le délai pour calculer les valeur et durée maximales de réduction de puissance, à compter de la réception des puissances consommées, émises par chaque consommateur présélectionné, est inférieur à 1 minute ;
- lors de l'étape de calcul, les valeurs et durées maximales de réductions de puissance calculées sont des valeurs et des durées prévisionnelles, alors que les valeurs et durées prévisionnelles sont transmises chaque jour au gestionnaire de réseau et correspondent aux prévisions, pour une période prédéterminée, de préférence pour la journée suivante, des valeurs maximales de réduction de puissance et pendant une durée maximale.

L'invention a également pour objet une entité de pilotage de la consommation d'une pluralité de consommateurs de courant électrique présélectionnés dans un réseau électrique, le réseau électrique étant propre à alimenter une pluralité de consommateurs, les consommateurs présélectionnés étant aptes à accepter une diminution prédéterminée de puissance sur une plage de temps prédéterminée. Conformément à l'invention, l'entité de pilotage comprend :
- des moyens de réception d'un message contenant la puissance consommée d'un consommateur présélectionné, chaque consommateur présélectionné étant propre à émettre ledit message de manière régulière à destination de l'entité de pilotage, la durée entre deux émissions de message successives pour un consommateur donné étant inférieure à 1 heure, de préférence inférieure à 10 minutes, de préférence encore inférieure à 1 minute,
- un organe de calcul d'une valeur maximale de réduction de puissance pour l'ensemble des consommateurs présélectionnés et pendant une durée maximale, ladite valeur maximale étant calculée en fonction des valeurs reçues de puissance consommée pour chaque consommateur présélectionné,
- des moyens de transmission à destination d'un gestionnaire de réseau des valeur et durée maximales de réduction de puissance calculées,
- des moyens de réception d'un ordre de commande d'une réduction de puissance aux consommateurs présélectionnés pendant une durée sélectionnée, la valeur de la réduction de puissance commandée étant inférieure ou égale à la valeur maximale de réduction de puissance calculée et la durée sélectionnée étant inférieure ou égale à la durée maximale de réduction de puissance calculée, l'ordre de commande étant envoyé par le gestionnaire de réseau.

Grâce à l'invention, l'entité de pilotage permet de garantir au gestionnaire de réseau une réserve de puissance, sous la forme d'une réduction de puissance, disponible rapidement. De plus, le gestionnaire de réseau n'a aucun calcul à effectuer, il est donc apte à activer cette réserve de puissance très rapidement lors d'une augmentation brusque de la consommation ou d'une diminution de la production sur le réseau.

Par ailleurs, la réduction de puissance est calculée par rapport à une consommation réelle, ce qui permet de garantir une valeur de la réduction de puissance et d'optimiser les coûts liés à cette réduction de puissance.

Enfin, la réduction de puissance est, de préférence ciblée, puisque les consommateurs présélectionnés sont par exemple répartis selon des zones géographiques, et lors de la réduction de puissance, le gestionnaire de réseau sélectionne une zone géographique donnée.

L'invention sera mieux comprise et d'autres avantages de celle-ci apparaitront à la lumière de la description qui va suivre, donnée uniquement à titre d'exemple non limitatif, et faite en se référant aux dessins annexés sur lesquels :
- la figure 1 est une représentation schématique d'un réseau alimentant différents consommateurs, d'un gestionnaire de réseau et d'une entité de pilotage permettant de réguler la consommation sur le réseau ;

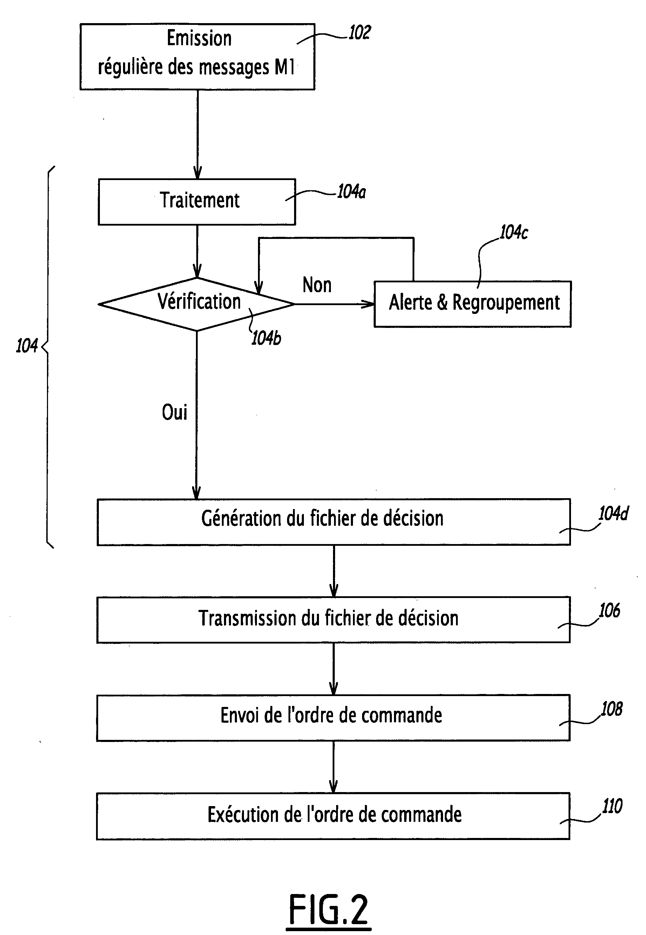

- la figure 2 est un organigramme des étapes d'un procédé de régulation de la puissance consommée sur un réseau électrique conforme à l'invention.

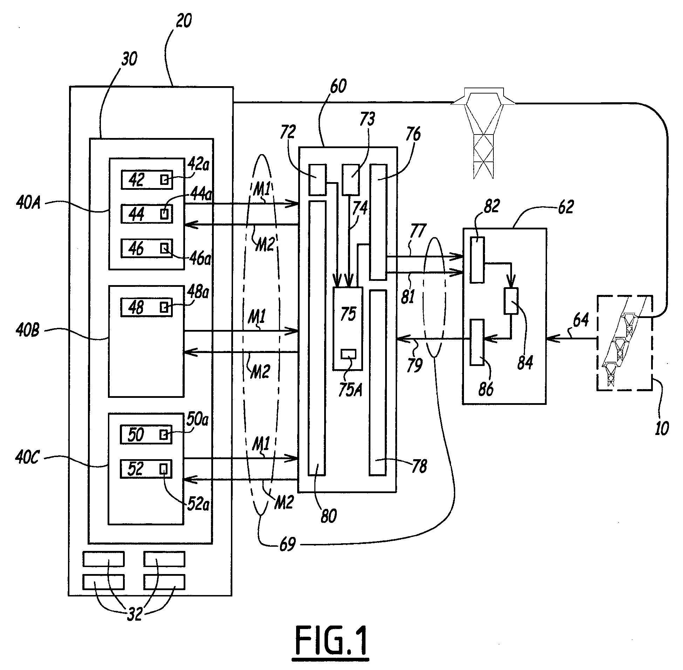

Sur la figure 1, un réseau électrique 10 est propre à alimenter un ensemble 20 de consommateurs de courant électrique. Cet ensemble 20 de consommateurs comprend un sous-ensemble 30 de consommateurs présélectionnés aptes à accepter une diminution prédéterminée de puissance sur une plage de temps prédéterminée, et d'autres consommateurs 32. Le sous-ensemble 30 des consommateurs présélectionnés est réparti, par exemple, entre une première, une deuxième et une troisième zones géographiques notées respectivement 40A, 40B et 40C. La première zone géographique 40A comprend trois consommateurs présélectionnés 42, 44, 46, la deuxième zone géographique 40B comprend un consommateur présélectionné 48, et la troisième zone géographique 40C comprend deux consommateurs présélectionnés 50, 52.

Chaque consommateur présélectionné 42, 44, 46, 48, 50, 52 comprend un organe de contrôle noté respectivement 42a, 44a, 46a, 48a, 50a, 52a. Les consommateurs présélectionnés 42, 44, 46, 48, 50, 52 de chaque zone géographique 40A, 40B, 40C sont reliés à une entité de pilotage 60 par l'intermédiaire de l'organe de contrôle 42a, 44a, 46a, 48a, 50a, 52a. La communication entre l'organe de contrôle 42a, 44a, 46a, 48a, 50a, 52a et l'entité de pilotage 60 est assurée à l'aide d'une connexion sécurisée de type réseau privé virtuel, également appelé connexion VPN (de l'anglais Virtual Private Network), à l'aide du réseau Internet 69.

Chaque consommateur présélectionné 42, 44, 46, 48, 50, 52 est apte à accepter une diminution prédéterminée de puissance, sur la plage de temps prédéterminée. La diminution prédéterminée de puissance et la plage de temps prédéterminée sont définis par accord entre l'entité de pilotage 60 et les consommateurs présélectionnés 42, 44, 46, 48, 50, 52.

Chaque consommateur présélectionné 42, 44, 46, 48, 50, 52 émet à destination de l'entité de pilotage 60 un message M1 contenant les puissances consommées instantanées ou moyennées dudit consommateur présélectionné grâce à son organe de contrôle 42a, 44a, 46a, 48a, 50a, 52a. En complément, l'organe de contrôle 42a, 44a, 46a, 48a, 50a, 52a permet aussi, d'envoyer à l'entité de pilotage 60 par l'intermédiaire du message M1 des informations de non-disponibilité prévue ou fortuite et de non-acceptation d'une réduction de la puissance.

En complément encore, chaque consommateur présélectionné 42, 44, 46, 48, 50, 52 comprend un ou plusieurs sous-consommateurs, non représentés sur les différentes figures. La puissance consommée par chaque consommateur présélectionné 42, 44, 46, 48, 50, 52 est égale à la somme des puissances consommées par les sous-consommateurs correspondants et est transmise via le message M1. En complément encore, le message M1 comprend la puissance consommée par chaque sous-consommateur.

L'entité de pilotage 60 est directement reliée à un gestionnaire de réseau 62, également appelé entité de régulation, assurant le transport et/ou la distribution de l'électricité et la gestion du réseau 10 ou uniquement la gestion du réseau 10. Le gestionnaire de réseau 62 reçoit de la part du réseau 10, des informations 64 relatives à la consommation sur le réseau 10 et à la capacité de production sur le réseau 10. Ces informations 64 sont exprimées de différentes manières en fonction du type de réseau en particulier.

L'entité de pilotage 60 comprend des premiers moyens 72 de réception du message M1, des moyens 73 de mémorisation de paramètres d'exploitation 74, les paramètres d'exploitation 74 étant spécifiques à chaque consommateur présélectionné 42, 44, 46, 48, 50, 52.

L'entité de pilotage 60 comprend un organe de calcul 75, des moyens 76 de transmission d'un fichier de décision 77 et des deuxièmes moyens 78 de réception et d'exécution d'un ordre de commande 79 d'une réduction de la puissance à chaque consommateur présélectionnées 42, 44, 46, 48, 50, 52, pendant une durée sélectionnée. De plus l'entité de pilotage 60 comprend des moyens 80 d'affichage de signaux d'alerte et de résultats des calculs effectués par l'organe de calcul 75.

Le gestionnaire de réseau 62 comprend des troisièmes moyens 82 de réception du fichier de décision 77, un organe de traitement 84 et des deuxièmes moyens 86 de transmission de l'ordre de commande 79.

Les premiers moyens de réception 72 sont propres à récupérer les messages M1, et plus particulièrement, les valeurs de puissance consommée instantanée ou moyennée de chaque consommateur présélectionné 42, 44, 46, 48, 50, 52.

Les moyens de mémorisation 73 sont propres à mémoriser les paramètres d'exploitation 74, qui sont connus de l'entité de pilotage 60, par exemple suite à un contrat passé entre l'entité de pilotage 60 et chaque consommateur présélectionné 42, 44, 46, 48, 50, 52. Les paramètres d'exploitation 74 comprennent pour chaque consommateur présélectionné 42, 44, 46, 48, 50, 52 :
- la valeur de la diminution prédéterminée de puissance, ou en complément des critères de calcul de la valeur de diminution de puissance prédéterminée en fonction de la puissance consommée,
- un nombre maximum de réductions autorisées de la puissance sur une période de temps prédéterminée,
- un nombre de réductions de puissance réalisées depuis le début d'une période de temps prédéterminée,
- un délai minimum entre deux réductions successives de la puissance,
- la plage de temps prédéterminée de la réduction de la puissance ou, en complément, des durées minimale et maximale prédéterminées de la réduction de puissance,
- un délai minimum de mise en oeuvre de la réduction de la puissance,
- un calendrier de disponibilité de la réduction de puissance.

De plus, chaque consommateur présélectionné 42, 44, 46, 48, 50, 52 assujettit son offre de puissance disponible à une contrepartie financière connue de la part de l'entité de pilotage 60.

L'organe de calcul 75 est propre à calculer une valeur maximale de réduction de puissance pour l'ensemble 30 des consommateurs présélectionnés et des durées minimale et maximale de cette réduction de puissance. Ces calculs sont effectués en fonction des paramètres d'exploitation 74 enregistrés par les moyens de mémorisation 73 et des puissances consommées instantanées transmises via chaque message M1. L'organe de calcul 75 comprend un organe de traitement 75A propre à traiter les paramètres d'exploitation 74 afin de réaliser les calculs de réduction de puissance et de durées maximale et minimale. En complément, l'organe de traitement 75A est propre à vérifier que la réduction de puissance offerte par les consommateurs présélectionnés est, pour chaque zone géographique 40A, 40B, 40C ou pour l'ensemble des consommateurs présélectionnés 30, supérieure ou égale à une valeur prédéterminée, par l'entité de pilotage 60, de réduction de puissance. Dans le cas où l'organe de traitement 75A détecte, lors de la vérification, que la réduction de puissance offerte par les consommateurs présélectionnés est inférieure à la valeur prédéterminée, l'organe de traitement 75A est propre à émettre une alerte sur des moyens d'affichage 80 de l'entité de pilotage 60. Il est également propre à regrouper un plus grand nombre de consommateur présélectionnées 42, 44, 46, 48, 50, 52 afin d'augmenter la réduction de puissance disponible. L'organe de calcul 75 est enfin propre à générer le fichier de décision 77 comprenant la valeur maximale et les durées minimale et maximale de réduction de puissance calculées.

Par la suite, des moyens de transmission 76 sont aptes à transmettre au gestionnaire de réseau 62 le fichier de décision 77.

Les deuxièmes moyens de réception 78 sont propres à recevoir l'ordre de commande 79 d'une réduction de la puissance consommée, pendant une durée sélectionnée et à l'exécuter. Afin de l'exécuter, les deuxièmes moyens de réception 78 sont propres à envoyer un message de commande M2 aux organes de contrôle 42a, 44a, 46a, 48a, 50a, 52a qui sont propres à réduire la puissance des consommateurs présélectionnés 42, 44, 46, 48, 50, 52.

Les troisièmes moyens de réception 82 du gestionnaire de réseau 62 sont propres à recevoir le fichier de décision 77 et à le transmettre à l'unité de traitement 84.

L'unité 84 est apte à récupérer les valeur maximale et durées minimale et maximale de réduction de puissance, et à sélectionner une valeur de réduction de puissance pendant une durée sélectionnée. En complément, la réduction de puissance est propre à une ou des zones géographiques 40A, 40B, 40C.

Les moyens de transmission 86 étant aptes à transmettre la valeur sélectionnée sous la forme de l'ordre de commande 79 à l'entité de pilotage 60.

L'entité de pilotage 60 et le gestionnaire de réseau 62 sont reliés par le réseau Internet 69. Les moyens de transmission 76, 86 et les moyens de réception 72, 78, 82 sont, par exemple, des routeurs Ethernet.

En variante ou en complément, les moyens de transmission et de réception sont des moyens radioélectriques et comportent des antennes radioélectriques, ou tout autre moyen de communication à distance.

L'entité de pilotage 60 et le gestionnaire de réseau 62 sont distants d'au moins 100 m, de préférence d'au moins 1 km, et plus généralement de plusieurs dizaines de kilomètres. L'entité de pilotage 60 et le gestionnaire de réseau 62 sont deux entités distinctes basées en des lieux différents, et ont des fonctions différentes. L'entité de pilotage 60 communique seulement avec les consommateurs présélectionnés 42, 44, 46, 48, 50, 52 tandis que le gestionnaire de réseau 62 gère l'ensemble du réseau 10 et des consommateurs 20.

En variante, l'entité de pilotage 60 et le gestionnaire de réseau 62 forment une seule entité.

Les valeurs de réduction de puissance pendant une durée donnée sont calculées par l'entité de pilotage 60, et sont disponibles au niveau du gestionnaire de réseau 62 sur, par exemple, un portail web, ou par l'intermédiaire d'un fichier informatique, et un programme décide de l'envoi de l'ordre de commande 79 de la réduction de puissance.

Par ailleurs, les zones géographiques 40A, 40B, 40C sont définies d'un commun accord entre l'entité de pilotage et le gestionnaire de réseau 62.

Ainsi, au cours du procédé de régulation de la puissance consommée sur le réseau électrique, une première étape consiste à l'émission 102 de manière régulière du message M1 vers l'entité de pilotage 60, par chaque consommateur présélectionné 42, 44, 46, 48, 50, 52. La durée entre deux émissions de message successives pour un consommateur donné est inférieure à 1 heure, de préférence inférieure à 10 minutes et de préférence encore inférieure à 1 minute.

Lors d'une deuxième étape de calcul 104, l'entité de pilotage calcule ensuite une valeur maximale de réduction de puissance pour l'ensemble de consommateurs présélectionnés 42, 44, 46, 48, 50, 52 et les durées minimale et maximale de cette réduction de puissance.

En complément, lors de l'étape de calcul 104, l'entité de pilotage calcule plusieurs valeurs de réduction de puissance et les durées minimale et maximale de la réduction de puissance correspondante.

Les valeurs calculées sont, par exemple, égales à des pourcentages de la valeur maximale de réduction de puissance. De plus, dans la variante où chaque consommateur présélectionné 42, 44, 46, 48, 50, 52 comprend des sous-consommateurs, les valeurs de réduction de puissance calculées correspondent, par exemple, à des réductions de puissance consommée par chaque sous-consommateur ou des regroupements de sous-consommateurs.

Le nombre de valeurs calculées est défini d'un commun accord entre l'entité de pilotage 60 et le gestionnaire de réseau 62. Ces valeurs correspondent à différents scénarios et besoins de réduction de puissance consommée au global sur l'ensemble du réseau 10 ou par zone géographique.

L'étape de calcul 104 est décomposée en différentes étapes :
- une étape 104a de traitement des messages émis par chaque consommateur présélectionné 42, 44, 46, 48, 50, 52. Au cours de l'étape de traitement 104a, le traitement des paramètres d'exploitation 74 est effectué afin de réaliser les calculs des valeur maximale et durées minimales et maximales de réduction de puissance,
- une étape 104b de vérification que la réduction de puissance offerte par les consommateurs présélectionnés 42, 44, 46, 48, 50, 52 est, pour chaque zone géographique 40A, 40B, 40C, supérieure ou égale à une valeur prédéterminée de réduction de puissance,
- une étape 104c d'activation d'un signal d'alerte sur les moyens d'affichage 80, et de regroupement 104c de plus de consommateurs présélectionnés 42, 44, 46, 48, 50, 52 pour une zone géographique 40A, 40B, 40C donnée, dans le cas où la réduction de puissance offerte par les consommateurs précédemment présélectionnés 42, 44, 46, 48, 50, 52 , pour ladite zone géographique ou pour l'ensemble des zones géographiques est inférieure à la valeur prédéterminée de réduction de puissance. A la suite de l'étape 104c d'activation, on revient à l'étape 104b de vérification,
- une étape 104d de génération du fichier de décision 77 comprenant les valeur maximale et durées minimale et maximale de réduction de puissance calculées.

A la suite de l'étape 104a le premier message M1 a été traité de sorte que le résultat du traitement, présente, dans une représentation schématique et partielle, la forme suivante, dans le cas où uniquement les consommateurs présélectionnés 42, 44, 46 de la première zone géographique 40A sont considérés :

| Consommateur | Capacité d'effacement | Puissance disponible | |
|---|---|---|---|
| 42 | CE1 | Puissance disponible (MW) | 10 |
| | | €/MWh | 130 |
| | CE2 | Puissance disponible (MW) | 20 |
| | | €/MWh | 200 |
| 44 | CE1 | Puissance disponible (MW) | 20 |
| | | €/MWh | 160 |
| | CE2 | Puissance disponible (MW) | 0 |
| | | €/MWh | |
| 46 | CE1 | Puissance disponible (MW) | 20 |
| | | €/MWh | 190 |
| | CE2 | Puissance disponible (MW) | 20 |
| | | €/MWh | 140 |
| | CE3 | Puissance disponible (MW) | 10 |
| | | €/MWh | 130 |
| TOTAL | | Puissance disponible (MW) | 100 |
| | | €/MWh | 164 |

Les consommateurs présélectionnés 42, 44, 46 répartissent, par exemple, leur consommation en plusieurs réductions offertes de puissance, également appelées capacités d'effacement et notées CE1, CE2, CE3. Les capacités d'effacement CE1, CE2, CE3 correspondent, par exemple, aux sous-consommateurs présentés précédemment et sont spécifiques à chacun des consommateurs présélectionnés 42, 44, 46. Chaque capacité d'effacement CE1, CE2, CE3 correspond, par exemple, à un bâtiment ou à une machine électrique, que comprend le consommateur présélectionné 42, 44, 46, ce bâtiment ou cette machine pouvant accepter une réduction de puissance. Ainsi, la réduction de puissance maximale offerte par un consommateur présélectionné 42, 44, 46 correspond à la somme de ses capacités d'effacement CE1, CE2, CE3. A chaque capacité d'effacement CE1, CE2, CE3 est associée une puissance disponible, c'est-à-dire une réduction de puissance possible. De plus, un coût est associé à chaque réduction de puissance.

En complément, lors de l'étape de génération 104d, le fichier de décision 77 comprend plusieurs valeurs de réduction de puissance pendant une durée maximale, ces différentes valeurs correspondant à différents scénarios et besoins de réduction de puissance consommée globalement sur le réseau 10. Les valeurs comprises dans le fichier de décision 77 sont égales à des pourcentages de la valeur maximale de réduction de puissance ou à un regroupement de capacités d'effacement, c'est-à-dire de sous-consommateurs. Le fichier de décision 77 comprend aussi le coût par mégawatt heure (MWh) correspondant à chaque valeur de réduction de puissance.

Lors de l'étape 104c, le regroupement d'un plus grand nombre de consommateurs permet de garantir un niveau de réduction de puissance disponible à l'entité de pilotage.

L'étape suivante 106 consiste en la transmission par l'entité de pilotage 60 et à destination du gestionnaire de réseau 62 du fichier de décision 77.

Le fichier de décision 77, présente, dans une représentation schématique et partielle, la forme suivante :

| | | Scénario bas | Scénario moyen | Scénario haut |
|---|---|---|---|---|
| Global | Puissance disponible (MW) | 94 | 122 | 183 |
| | €/MWh | 126 | 131 | 150 |
| Zone 40A | Puissance disponible (MW) | 40 | 60 | 100 |
| | €/MWh | 135 | 143 | 164 |
| Zone 40B | Puissance disponible (MW) | 15 | 23 | 23 |
| | €/MWh | 105 | 110 | 110 |
| Zone 40C | Puissance disponible (MW) | 39 | 39 | 60 |
| | €/MWh | 125 | 125 | 141 |

Les différents scénarios correspondent à l'aspect complémentaire où le fichier de décision 77 comprend plusieurs valeurs de réduction de puissance. Dans l'exemple du tableau ci-dessus, trois scénarios sont envisageables, un scénario bas, un scénario moyen et un scénario haut. Chaque scénario se décline suivant plusieurs zones géographiques 40A, 40B, 40C et à chaque zone sont associés une réduction de puissance, appelée ici puissance disponible, et un coût. Le scénario haut est celui qui correspond à la réduction de puissance la plus importante, c'est-à-dire généralement à la réduction maximale de puissance.

A la suite de l'étape de transmission 106, une étape d'envoi 108 consiste en l'envoi par le gestionnaire de réseau 62 de l'ordre de commande 79. La valeur de la réduction de puissance commandée est inférieure ou égale à la valeur maximale de la réduction de puissance calculée, et la durée de la réduction de puissance sélectionnée est comprise entre la durée minimale et la durée maximale de réduction de puissance calculées. L'ordre de commande 79 correspond à un des scénarios calculés et proposés. En complément, à chaque scénario sont associés la durée minimale et la durée maximale de réduction de puissance calculées.

Puis, le procédé de régulation comporte une étape 110 d'exécution de l'ordre de commande 79 par l'entité de pilotage 60. L'ordre de commande 79 est exécuté par l'entité de pilotage 60 dès la réception de cet ordre. Plus précisément, le délai entre l'envoi de l'ordre de commande 79 et la réduction de la puissance des consommateurs présélectionnés 42, 44, 46, 48, 50, 52 est inférieur à 1 minute, de préférence inférieur à 30s, de préférence encore inférieur à 5 secondes. Il est ainsi considéré que la régulation est faite quasi-automatiquement, puisqu'elle est faite dans un délai très court. Afin d'effectuer cette réduction de puissance les deuxièmes moyens de réception 78 envoient le message M2 aux organes de contrôle 42a, 44a, 46a, 48a, 50a, 52a qui sont propres à réduire la puissance des consommateurs présélectionnés 42, 44, 46, 48, 50, 52.

Par ailleurs, en considérant les différents niveaux de réserve présentés précédemment, la réduction de la puissance offerte par les consommateurs présélectionnés 42, 44, 46, 48, 50, 52 correspond, par exemple, à une réserve primaire ou secondaire, puisqu'elle est activable dans un délai très court.

En variante, le délai entre l'envoi de l'ordre de commande 79 et la réduction de la puissance des consommateurs présélectionnés 42, 44, 46, 48, 50, 52 est inférieur à 10 minutes.

Dans le cas où le fichier de décision 77 comprend plusieurs scénarios, lors de l'exécution de l'ordre de commande 79, l'entité de pilotage 60 réduit la puissance de l'ensemble des consommateurs présélectionnés 42, 44, 46, 48, 50, 52, afin que cette valeur soit égale à la valeur transmise lors de l'envoi de l'ordre de commande 79 par le gestionnaire de réseau 62. Plus précisément, lors du calcul d'une réduction de puissance pour une zone géographique 40A, 40B, 40C, l'entité de pilotage 60 choisit un certain nombre de consommateurs, suivant le scénario considéré, parmi les consommateurs présélectionnés 42, 44, 46, 48, 50, 52, afin d'obtenir la réduction de puissance souhaitée pour le scénario. Ainsi, lors de la réception de l'ordre de commande 79, correspondant à un scénario choisi par le gestionnaire de réseau 62, puis de son exécution, seuls les consommateurs choisis lors de l'étape de calcul spécifique au scénario sélectionné par le gestionnaire de réseau 62 verront une réduction de leur puissance.

De plus, sachant que les consommateurs présélectionnés 42, 44, 46, 48, 50, 52 sont regroupés par zone géographique 40A, 40B, 40C, les valeurs de réduction de puissance et durée de cette réduction sont, lors de l'étape de calcul 104, calculées pour chacune des zones géographiques 40A, 40B, 40C. Ainsi, lors de l'étape d'envoi 108 de l'ordre de commande 79, l'ordre de commande 79 de la réduction de puissance est spécifique à une ou des zones géographiques 40A, 40B, 40C.

En outre, lors de l'étape de calcul 104, le délai pour calculer les valeur de réduction de puissance maximale et durées minimale et maximale, à compter de la réception de puissance consommée instantanée ou moyennée, c'est-à-dire à compter de la réception des messages M1, est inférieur à 1 minute. Plus précisément, dans ce cas, les valeurs de réduction de puissance et la durée de ces réductions de puissance seront considérées comme des valeurs temps réel correspondant à une réduction de puissance considérée comme une valeur temps réel.

En variante, lors de l'étape de calcul 104, des valeurs prévisionnelles de réduction de puissance maximales et de durées minimale et maximale peuvent être calculées et transmises chaque jour au gestionnaire de réseau 62. Ces valeurs correspondent aux prévisions, pour la journée suivante par exemple, ou plus généralement pour une période prédéterminée, des valeurs de réduction de puissance maximales et des durées minimale et maximale de cette réduction de puissance. Dans cette variante, à la suite de l'étape 104a, le premier message M1 a été traité de sorte que le résultat du traitement présente, dans une représentation schématique et partielle, la forme suivante, dans le cas où uniquement les consommateurs présélectionnés 42, 44, 46 de la première zone géographique 40A sont considérés :

| | | | Tranche horaire | | | | | | | | | | | |
|---|---|---|---|---|---|---|---|---|---|---|---|---|---|---|
| Consom -mateur | Capacité d'effacement | Puissance disponible | 0h-2h | 2h-4h | 4h-6h | 6h-8h | 8h-10h | 10h-12h | 12h-14h | 14h-16h | 16h-18h | 18h-20h | 20h-22h | 22h-24h |
| | CE1 | Puissance disponible (MW) | 0 | 0 | 0 | 0 | 10 | 10 | 10 | 10 | 0 | 0 | 0 | 0 |
| 42 | | €/MWh | | | | | 180 | 180 | 180 | 180 | | | | |
| | CE2 | Puissance disponible (MW) | 20 | 20 | 20 | 20 | 20 | 20 | 20 | 20 | 20 | 20 | 20 | 20 |
| | | €/MWh | 200 | 200 | 200 | 200 | 200 | 200 | 200 | 200 | 200 | 200 | 200 | 200 |
| | CE1 | Puissance disponible (MW) | 20 | 20 | 20 | 20 | 20 | 20 | 20 | 20 | 20 | | | |
| 44 | | €/MWh | 160 | 160 | 160 | 160 | 160 | 160 | 160 | 160 | 160 | | | |
| | CE2 | Puissance disponible (MW) | | | | | | | 30 | 30 | 30 | 30 | 30 | 30 |
| | | €/MWh | | | | | | | 150 | 150 | 150 | 150 | 150 | 150 |
| | CE1 | Puissance disponible (MW) | 30 | 30 | 30 | 30 | 20 | 20 | 20 | 20 | 20 | 30 | 30 | 30 |
| | | €/MWh | 190 | 190 | 190 | 190 | 190 | 190 | 190 | 190 | 190 | 190 | 190 | 190 |
| 46 | CE2 | Puissance disponible (MW) | | | | 20 | 20 | 20 | 20 | 20 | 20 | 20 | | |
| | | €/MWh | | | | 140 | 140 | 140 | 140 | 140 | 140 | 140 | | |
| | CE3 | Puissance disponible (MW) | | | | 10 | 10 | 12 | 12 | 10 | 10 | 10 | 10 | 10 |
| | | €/MWh | | | | 165 | 165 | 130 | 130 | 130 | 130 | 130 | 130 | 130 |
| TOTAL | | Puissance disponible (MW) | 70 | 70 | 70 | 100 | 100 | 102 | 132 | 130 | 120 | 110 | 90 | 90 |
| | | €/MWh | 184 | 184 | 184 | 174 | 173 | 168 | 164 | 165 | 163 | 166 | 172 | 172 |

Le tableau présenté ci-dessus est analogue à celui présenté précédemment pour le résultat du traitement dans le cas où des valeurs temps réel sont considérées, mais dans ce cas il s'agit ici de prévisions. Ainsi, les puissances disponibles ou réductions de puissance et les coûts associés sont donnés par tranche horaire pour une journée complète.

En complément, un fichier prévisionnel 81, optionnel, contenant ces valeurs prévisionnelles, est envoyé au gestionnaire de réseau 62. Le fichier prévisionnel 81, limité au scénario haut par exemple, présente, dans une représentation schématique et partielle, la forme suivante :

| | Puissance disponible | 0h-2h | 2h-4h | 4h-6h | 6h-8h | 8h-10h | 10h-12h | 12h-14h | 14h-16h | 16h-18h | 18h-20h | 20h-22h | 22h-24h |
|---|---|---|---|---|---|---|---|---|---|---|---|---|---|
| Global | Puissance disponible (MW) | 132 | 161 | 167 | 197 | 168 | 183 | 213 | 189 | 217 | 222 | 195 | 195 |
| | €/MWh | 154 | 153 | 153 | 150 | 147 | 150 | 150 | 147 | 130 | 133 | 130 | 130 |
| Zone 40A | Puissance disponible (MW) | 70 | 70 | 70 | 100 | 100 | 100 | 130 | 121 | 120 | 110 | 90 | 90 |
| | €/MWh | 184 | 184 | 184 | 170 | 164 | 164 | 161 | 162 | 130 | 130 | 128 | 128 |
| Zone 40B | Puissance disponible (MW) | 23 | 52 | 52 | 52 | 23 | 23 | 23 | 23 | 52 | 52 | 45 | 45 |
| | €/MWh | 110 | 132 | 132 | 132 | 110 | 110 | 110 | 110 | 132 | 132 | 120 | 120 |
| Zone 40C | Puissance disponible (MW) | 39 | 39 | 45 | 45 | 45 | 60 | 60 | 45 | 45 | 60 | 60 | 60 |
| | €/MWh | 125 | 125 | 127 | 127 | 127 | 141 | 141 | 127 | 127 | 141 | 141 | 141 |

Le fichier prévisionnel 81 est globalement similaire au fichier de décision 77 présenté précédemment pour les valeurs temps réel, mais comprend les puissances disponibles pour chaque tranche horaire d'une journée. Il s'agit de puissances disponibles prévisionnelles.

L'invention présentée ci-dessus présente de multiples avantages et notamment, elle permet de garantir au gestionnaire de réseau une réserve de puissance, sous la forme d'une réduction de puissance à certains consommateurs présélectionnés. Cette réserve de puissance est garantie et disponible à un coût réduit puisque calculée par rapport à une consommation instantanée réelle. De plus le gestionnaire de réseau n'a aucun calcul à effectuer, la réduction de puissance est donc activable encore plus rapidement. Plus précisément, la réserve de puissance correspondant à cette réduction de puissance est disponible très rapidement, par exemple dans un délai inférieur à 1 minute, de préférence à 30 secondes ou 5 secondes, c'est-à-dire quasi-instantanément. Cette invention permet donc de répondre à une situation d'urgence et à un déséquilibre non-anticipé entre consommation et production sur le réseau 10. En outre l'invention permet de cibler géographiquement la réduction de puissance, et de sélectionner certains consommateurs parmi les consommateurs présélectionnés pour lequel la réduction de puissance engendre un coût de rémunération faible. Enfin, le fait de pouvoir regrouper un nombre plus ou moins grand de consommateurs présélectionnés 42, 44, 46, 48, 50, 52 pour une zone géographique 40A, 40B, 40C donnée, lors de l'étape d'activation 104c, permet d'élargir le nombre de consommateurs potentiellement candidats et aptes à contractualiser avec l'entité de pilotage 60. En effet, des consommateurs dont la plage de disponibilité n'est pas conforme aux exigences du gestionnaire de réseau peuvent maintenant participer au mécanisme de réduction de la puissance en étant regroupés avec d'autres consommateurs.

L'entité de pilotage 60 permet une automatisation du traitement et de la régulation de la consommation sur le réseau électrique.

Selon une variante, chaque zone géographique 40A, 40B, 40C est découpé en plusieurs secteurs. Cette variante existe dans le cas où le niveau de réduction de puissance et le nombre de consommateurs est élevé dans une même zone géographique.

## Revendications

1. Procédé de régulation de la puissance consommée sur un réseau électrique (10), le réseau électrique étant propre à alimenter une pluralité de consommateurs (20) de courant électrique, des consommateurs présélectionnés (42, 44, 46, 48, 50, 52) étant aptes à accepter une diminution prédéterminée de puissance sur une plage de temps prédéterminée,
le procédé étant **caractérisé en ce qu'**il comprend les étapes suivantes :
- l'émission (102) à une entité de pilotage (60), de manière régulière et par chaque consommateur présélectionné (42, 44, 46, 48, 50, 52), d'un message (M1) contenant la puissance consommée dudit consommateur présélectionné, la durée entre deux émissions de message (M1) successives pour un consommateur donné (42, 44, 46, 48, 50, 52) étant inférieure à 1 heure, de préférence inférieure à 10 minutes, de préférence encore inférieure à 1 minute,
- le calcul (104), par l'entité de pilotage (60), d'une valeur maximale de réduction de puissance pour l'ensemble de consommateurs présélectionnés (42, 44, 46, 48, 50, 52) et d'une durée maximale de cette réduction de puissance, ladite valeur maximale étant calculée en fonction des valeurs reçues de puissance consommée pour chaque consommateur présélectionné,
- la transmission (106), par l'entité de pilotage (60) et à destination d'un gestionnaire de réseau (62), des valeur et durée maximales de réduction de puissance calculées,
- l'envoi (108), par le gestionnaire de réseau (62) à l'entité de pilotage (60), d'un ordre de commande (79) d'une réduction de puissance (42, 44, 46, 48, 50, 52) pendant une durée sélectionnée, la valeur de la réduction de puissance commandée étant inférieure ou égale à la valeur maximale de réduction de puissance calculée et la durée sélectionnée étant inférieure ou égale à la durée maximale de réduction de puissance calculée.

2. Procédé selon la revendication 1, **caractérisé en ce que** l'entité de pilotage (60) est distincte du gestionnaire de réseau (62), l'entité de pilotage (60) étant de préférence propre à communiquer avec le gestionnaire de réseau (62) via le réseau Internet (69).

3. Procédé selon l'une des revendications précédentes, **caractérisé en ce que** :
- lors de l'étape de calcul (104), l'entité de pilotage calcule une durée minimale de réduction de puissance,
- lors de l'étape de transmission (106), ladite durée minimale est transmise au gestionnaire de réseau (62),
- et **en ce que** lors de l'étape d'envoi (108), la durée sélectionnée est comprise entre la durée minimale et la durée maximale de réduction de puissance calculées.

4. Procédé selon l'une des revendications précédentes, **caractérisé en ce que**, lors de l'étape d'émission (102), la puissance consommée émise est une puissance instantanée ou moyennée.

5. Procédé selon l'une des revendications précédentes, **caractérisé en ce que** l'ordre de commande (79) de la réduction de puissance (42, 44, 46, 48, 50, 52) est exécuté par l'entité de pilotage (60) dès la réception de cet ordre, et **en ce que** le délai entre l'envoi de l'ordre (79) et la réduction de la puissance des consommateurs présélectionnés est inférieur à 1 minute, de préférence inférieur à 30 secondes, de préférence encore inférieur à 5 secondes.

6. Procédé selon l'une des revendications précédentes, **caractérisé en ce que** le réseau électrique (10) est propre à alimenter une pluralité de zones géographiques (40A, 40B, 40C) distinctes, et les consommateurs présélectionnés (42, 44, 46, 48, 50, 52) sont regroupés par zone géographique (40A, 40B, 40C),
**en ce que**, lors de l'étape de calcul (104), les valeur et durée maximales de réduction de puissance sont calculées pour chacune des zones géographiques (40A, 40B, 40C) et,
**en ce que**, lors de l'étape d'envoi (108) de l'ordre de commande (79), l'ordre de commande (79) de la réduction de puissance est spécifique à une ou des zones géographiques (40A, 40B, 40C).

7. Procédé selon la revendication 6, **caractérisé en ce que**, lors de l'étape de calcul (104), l'entité de pilotage (60) réalise les étapes suivantes :
a) le traitement (104a) des messages émis par chaque consommateur présélectionné,
b) la vérification (104b) que la réduction de puissance offerte par les consommateurs présélectionnés (42, 44, 46, 48, 50, 52) est, pour chaque zone géographique (40A, 40B, 40C), supérieure ou égale à une valeur prédéterminée de réduction de puissance,
c) l'activation (104c) d'un signal d'alerte sur un terminal de l'entité de pilotage et l'augmentation du nombre de consommateurs présélectionnés pour une zone géographique donnée (42, 44, 46, 48, 50, 52) si la réduction de puissance offerte par les consommateurs précédemment présélectionnés pour ladite zone géographique (42, 44, 46, 48, 50, 52) est inférieure à la valeur prédéterminée de réduction de puissance, puis le retour à l'étape de vérification (104b),
d) la génération (104d) d'un fichier de décision (77) comprenant les valeur et durée maximales de réduction de puissance calculées.

8. Procédé selon la revendication 7, **caractérisé en ce que**, lors du traitement des messages (M1) émis par chaque consommateur présélectionné (42, 44, 46, 48, 50, 52), l'entité de pilotage (60) calcule, pour chaque consommateur présélectionné (42, 44, 46, 48, 50, 52), la réduction de puissance et la durée de cette réduction de puissance, en fonction de la valeur de puissance consommée et des paramètres suivants:
- la valeur de la diminution prédéterminée de puissance,
- le nombre maximum de réductions autorisées de la puissance sur une période de temps prédéterminée,
- le nombre de réductions de puissance réalisées depuis le début d'une période de temps prédéterminée,
- le délai minimum entre deux réductions successives de la puissance,
- la plage de temps prédéterminée de la réduction de la puissance,
- le délai minimum de mise en oeuvre de la réduction de la puissance,
- le calendrier de disponibilité du consommateur.

9. Procédé selon l'une des revendications précédentes, **caractérisé en ce que** chaque consommateur présélectionné (42, 44, 46, 48, 50, 52) comprend un ou plusieurs sous-consommateurs et **en ce que** lors de l'étape d'émission, la puissance consommée émise, via le message (M1), par chaque consommateur présélectionné (42, 44, 46, 48, 50, 52) est égale à la somme des puissances consommées par les sous-consommateurs correspondants, et **en ce que** le message (M1) comprend également la puissance consommée par chaque sous-consommateur.

10. Procédé selon la revendication 9, **caractérisé en ce que** :
- lors de l'étape de calcul (104), l'entité de pilotage (60) calcule, pour chaque consommateur présélectionné, (42, 44, 46, 48, 50, 52) plusieurs valeurs de réduction de puissance pendant une durée maximale, les valeurs calculées étant égales à des pourcentages respectifs de la valeur maximale de réduction de puissance et correspondant à des réductions de puissance consommée par chaque sous-consommateur ou des regroupements de sous-consommateurs.
- lors de l'étape de transmission (106), l'entité de pilotage (60) transmet les différentes valeurs de réduction de puissance calculées et les durées maximales correspondantes.
- lors de l'étape d'envoi (108), la valeur de la réduction de puissance commandée est égale à l'une des valeurs transmises par l'entité de pilotage (60).

11. Procédé selon l'une des revendications précédentes, **caractérisé en ce que**, lors de l'étape de calcul (104), le délai pour calculer les valeur et durée maximales de réductions de puissance, à compter de la réception des puissances consommées, émises par chaque consommateur présélectionné (42, 44, 46, 48, 50, 52), est inférieur à 1 minute.

12. Procédé selon l'une des revendications précédentes, **caractérisé en ce que**, lors de l'étape de calcul (104), les valeurs et durées maximales de réductions de puissance calculées sont des valeurs et des durées prévisionnelles, et **en ce que** les valeurs et durées prévisionnelles sont transmises chaque jour au gestionnaire de réseau et correspondent aux prévisions, pour une période prédéterminée, de préférence pour la journée suivante, des valeurs maximales de réduction de puissance et pendant une durée maximale.

13. Entité de pilotage (60) de la consommation d'une pluralité de consommateurs (42, 44, 46, 48, 50, 52) de courant électrique présélectionnés dans un réseau électrique (10), le réseau électrique (10) étant propre à alimenter une pluralité de consommateurs (20), les consommateurs présélectionnés (42, 44, 46, 48, 50, 52) étant aptes à accepter une diminution prédéterminée de puissance sur une plage de temps prédéterminée,
l'entité de pilotage (60) étant **caractérisée en ce qu'**elle comprend :
- des moyens de réception (72) d'un message (M1) contenant la puissance consommée d'un consommateur présélectionné (42, 44, 46, 48, 50, 52), chaque consommateur présélectionné (42, 44, 46, 48, 50, 52) étant propre à émettre ledit message (M1) de manière régulière à destination de l'entité de pilotage (60), la durée entre deux émissions de message (M1) successives pour un consommateur donné étant inférieure à 1 heure, de préférence inférieure à 10 minutes, de préférence encore inférieure à 1 minute,
- un organe de calcul (75) d'une valeur maximale de réduction de puissance pour l'ensemble des consommateurs présélectionnés (42, 44, 46, 48, 50, 52) et pendant une durée maximale, ladite valeur maximale étant calculée en fonction des valeurs reçues de puissance consommée pour chaque consommateur présélectionné,
- des moyens de transmission (76) à destination d'un gestionnaire de réseau (62) des valeur et durée maximales de réduction de puissance calculées,
- des moyens de réception (78) d'un ordre de commande (79) d'une réduction de puissance aux consommateurs présélectionnés (42, 44, 46, 48, 50, 52) pendant une durée sélectionnée, la valeur de la réduction de puissance commandée étant inférieure ou égale à la valeur maximale de réduction de puissance calculée et la durée sélectionnée étant inférieure ou égale à la durée maximale de réduction de puissance calculée, l'ordre de commande (79) étant envoyé par le gestionnaire de réseau (62).

## Patentansprüche

1. Verfahren zum Regeln der verbrauchten Leistung in einem elektrischen Netz (10), wobei das elektrische Netz geeignet ist, eine Mehrzahl von Verbrauchern (20) mit elektrischem Strom zu versorgen und vorerwählte Verbraucher (42, 44, 46, 48, 50, 52) in der Lage sind, eine vorbestimmte Verringerung an Leistung über einen vorbestimmten Zeitbereich zu akzeptieren,
wobei das Verfahren **dadurch gekennzeichnet ist, dass** es die folgenden Schritte umfasst:
- die Aussendung (102) einer die verbrauchte Leistung des vorerwählten Verbrauchers enthaltenden Nachricht (M1) in regelmäßiger Weise und durch jeden vorerwählten Verbraucher (42, 44, 46, 48, 50, 52) an eine Steuereinheit (60), wobei die Dauer zwischen zwei aufeinanderfolgenden Aussendungen der Nachricht (M1) für einen gegebenen Verbraucher (42, 44, 46, 48, 50, 52) kleiner als eine Stunde ist, vorzugsweise kleiner als 10 Minuten, noch bevorzugter kleiner als 1 Minute,
- die Berechnung (104) eines Maximalwerts der Verringerung der Leistung für die Gesamtheit der vorerwählten Verbraucher (42, 44, 46, 48, 50, 52) und einer Maximaldauer dieser Verringerung der Leistung durch die Steuereinheit (60), wobei der Maximalwert abhängig von empfangenen Werten der verbrauchten Leistung für jeden vorerwählten Verbraucher berechnet wird,
- die Übertragung (106) des berechneten Maximalwerts und der berechneten Maximaldauer der Verringerung der Leistung von der Steuereinheit (60) an einen Netzbetreiber (62),
- das Senden (108) eines Befehls (79) durch den Netzbetreiber (62) an die Steuereinheit (60) für die Verringerung der Leistung (42, 44, 46, 48, 50, 52) während einer ausgewählten Dauer, wobei der befohlene Wert der Verringerung der Leistung kleiner oder gleich dem Maximalwert der Verringerung der Leistung und die ausgewählte Dauer kleiner oder gleich der berechneten Maximaldauer der Verringerung der Leistung ist.

2. Verfahren nach Anspruch 1, **dadurch gekennzeichnet, dass** die Steuereinheit (60) getrennt vom Netzbetreiber (62) ist, wobei die Steuereinheit (60) vorzugsweise geeignet ist, mit dem Netzbetreiber (62) über das Internet (69) zu kommunizieren.

3. Verfahren nach einem der vorhergehenden Ansprüche, **dadurch gekennzeichnet, dass**:
- bei dem Berechnungsschritt (104) die Steuereinheit eine Minimaldauer der Verringerung der Leistung berechnet,
- bei dem Übertragungsschritt (106) die Minimaldauer dem Netzbetreiber (62) übertragen wird,
- und dass bei dem Sendeschritt (108) die ausgewählte Dauer zwischen der berechneten Minimaldauer und Maximaldauer der Verringerung der Leistung liegt.

4. Verfahren nach einem der vorhergehenden Ansprüche, **dadurch gekennzeichnet, dass** bei dem Schritt (102) des Aussendens die ausgesendete verbrauchte Leistung eine Momentanleistung oder eine Mittelwertleistung ist.

5. Verfahren nach einem der vorhergehenden Ansprüche, **dadurch gekennzeichnet, dass** der Befehl (79) der Verringerung der Leistung (42, 44, 46, 48, 50, 52) durch die Steuereinheit (60) ausgeführt wird, sobald dieser Befehl empfangen wird und dass die Verzögerung zwischen dem Senden des Befehls (79) und der Verringerung der Leistung der vorerwählten Verbraucher kleiner als 1 Minute, vorzugsweise kleiner als 30 Sekunden, noch bevorzugter kleiner als 5 Sekunden ist.

6. Verfahren nach einem der vorhergehenden Ansprüche, **dadurch gekennzeichnet, dass** das elektrische Netz (10) geeignet ist, eine Mehrzahl von unterschiedlichen geografischen Zonen (40A, 40B, 40C) zu versorgen und die vorerwählten Verbraucher (42, 44, 46, 48, 50, 52) nach geografischer Zone (40A, 40B, 40C) zusammengefasst werden, dass bei dem Berechnungsschritt (104) der Maximalwert und die Maximaldauer der Verringerung der Leistung für jede der geografischen Zonen (40A, 40B, 40C) berechnet wird, und
dass bei dem Sendeschritt (108) des Befehls (79) der Befehl (79) der Verringerung der Leistung für eine oder mehrere geografische Zonen (40A, 40B, 40C) spezifisch ist.

7. Verfahren nach Anspruch 6, **dadurch gekennzeichnet, dass** bei dem Berechnungsschritt (104) die Steuereinheit (60) die folgenden Schritte realisiert:
a) die Verarbeitung (104a) der von jedem vorerwählten Verbraucher ausgesendeten Nachrichten,
b) die Prüfung (104b), dass die von den vorerwählten Verbrauchern (42, 44, 46, 48, 50, 52) angebotene Verringerung der Leistung für jede geografische Zone (40A, 40B, 40C) größer oder gleich einem vorbestimmten Wert der Verringerung der Leistung ist,
c) die Aktivierung (104c) eines Warnsignals an einem Endgerät der Steuereinheit und die Erhöhung der Anzahl von vorerwählten Verbrauchern (42, 44, 46, 48, 50, 52) für eine gegebene geografische Zone, wenn die Verringerung der Leistung, die von den zuvor für diese geografische Zone vorerwählten Verbrauchern (42, 44, 46, 48, 50, 52) angeboten wurde, kleiner als der vorbestimmte Wert der Verringerung der Leistung ist, dann das Zurückkehren zum Prüfungsschritt (104b),
d) die Erzeugung (104d) einer Entscheidungsdatei (77), die den berechneten Maximalwert und die berechneten Maximaldauer der Verringerung der Leistung umfasst.

8. Verfahren nach Anspruch 7, **dadurch gekennzeichnet, dass** bei der Verarbeitung der Nachrichten (M1), die von jedem vorerwählten Verbraucher (42, 44, 46, 48, 50, 52) ausgesendet wird, die Steuereinheit (60) für jeden vorerwählten Verbraucher (42, 44, 46, 48, 50, 52) die Verringerung der Leistung und die Dauer dieser Verringerung der Leistung abhängig von dem Wert der verbrauchten Leistung und den folgenden Parametern berechnet:
- dem Wert der vorbestimmten Verringerung der Leistung,
- der maximalen Anzahl der autorisierten Verringerungen der Leistung über einen vorbestimmten Zeitraum,
- der Anzahl der Verringerungen der Leistung, die seit dem Beginn eines vorbestimmten Zeitraums realisiert wurden,
- der minimalen Verzögerung zwischen zwei aufeinanderfolgenden Verringerungen der Leistung,
- dem vorbestimmten Zeitbereich der Verringerung der Leistung,
- der minimalen Verzögerung der Umsetzung der Verringerung der Leistung,
- den Verfügbarkeitsterminen des Verbrauchers.

9. Verfahren nach einem der vorhergehenden Ansprüche, **dadurch gekennzeichnet, dass** jeder vorerwählte Verbraucher (42, 44, 46, 48, 50, 52) einen oder mehrere Unterverbraucher umfasst und dass bei dem Schritt der Aussendung über die Nachricht (M1) die ausgesendete verbrauchte Leistung pro jedem vorerwählten Verbraucher (42, 44, 46, 48, 50, 52) gleich der Summe der durch die korrespondierenden Unterverbraucher verbrauchten Leistungen ist und dass die Nachricht (M1) gleichfalls die von jedem Unterverbraucher verbrauchte Leistung umfasst.

10. Verfahren nach Anspruch 9, **dadurch gekennzeichnet, dass**:
- bei dem Berechnungsschritt (104) die Steuereinheit (60) für jeden vorerwählten Verbraucher (42, 44, 46, 48, 50, 52) mehrere Werte der Verringerung der Leistung während einer Maximaldauer berechnet, wobei die berechneten Werte gleich jeweiligen Prozentangaben des Maximalwertes der Verringerung der Leistung und korrespondierend zu den Verringerungen der von jedem Unterverbraucher oder von Zusammenfassungen von Unterverbrauchern verbrauchten Leistung sind,
- bei dem Übertragungsschritt (106) die Steuereinheit (60) unterschiedliche berechnete Werte der Verringerung der Leistung und die korrespondierenden Maximaldauern überträgt,
- bei dem Sendeschritt (108) der befohlene Wert der Verringerung der Leistung gleich einem der von der Steuereinheit (60) übertragenen Werte ist.

11. Verfahren nach einem der vorhergehenden Ansprüche, **dadurch gekennzeichnet, dass** bei dem Berechnungsschritt (104) die Verzögerung zum Berechnen des Maximalwerts und der Maximaldauer der Verringerungen der Leistung, gerechnet von dem Empfang der verbrauchten Leistungen, die von jedem vorerwählten Verbraucher (42, 44, 46, 48, 50, 52) ausgesendet wurden, kleiner als 1 Minute ist.

12. Verfahren nach einem der vorhergehenden Ansprüche, **dadurch gekennzeichnet, dass** bei dem Berechnungsschritt (104) die berechneten Maximalwerte und Maximaldauern der Verringerung der Leistung Werte und Dauern sind, die voraussichtlich vorgesehen sind, und dass die voraussichtlichen Werte und Dauern täglich an den Netzbetreiber übertragen werden und für einen vorbestimmten Zeitraum, vorzugsweise für den nächsten Tag, den Prognosen der Maximalwerte der Verringerung der Leistung und während einer Maximaldauer entsprechen.

13. Steuereinheit (60) des Verbrauchs an elektrischem Strom einer Mehrzahl von vorerwählten Verbrauchern (42, 44, 46, 48, 50, 52) in einem elektrischen Netz (10), wobei das elektrische Netz (10) geeignet ist, eine Mehrzahl von Verbrauchern (20) zu versorgen und die vorerwählten Verbraucher (42, 44, 46, 48, 50, 52) in der Lage sind, eine vorbestimmte Verringerung an Leistung über einen vorbestimmten Zeitraum zu akzeptieren,
wobei die Steuereinheit (60) **dadurch gekennzeichnet ist, dass** sie umfasst:
- Mittel (72) zum Empfangen einer Nachricht (M1), die die verbrauchte Leistung eines vorerwählten Verbrauchers (42, 44, 46, 48, 50, 52) enthält, wobei jeder vorerwählte Verbraucher (42, 44, 46, 48, 50, 52) geeignet ist, die Nachricht (M1) in regelmäßiger Weise an die Steuereinheit (60) auszusenden und die Dauer zwischen zwei aufeinanderfolgenden Aussendungen der Nachricht (M1) für einen gegebenen Verbraucher kleiner als 1 Stunde, vorzugsweise kleiner als 10 Minuten, noch bevorzugter kleiner als 1 Minute ist,
- ein Organ (75) zur Berechnung eines Maximalwerts der Verringerung der Leistung für die Gesamtheit der vorerwählten Verbraucher (42, 44, 46, 48, 50, 52) und während einer maximalen Dauer, wobei der Maximalwert abhängig von empfangenen Werten der verbrauchten Leistung für jeden vorerwählten Verbraucher berechnet wird,
- Mittel (76) zur Übertragung des berechneten Maximalwerts und der berechneten Maximaldauer der Verringerung der Leistung an einen Netzbetreiber (62),
- Mittel (78) zum Empfangen eines Befehls (79) für eine Verringerung der Leistung an die vorerwählten Verbraucher (42, 44, 46, 48, 50, 52) während einer ausgewählten Dauer, wobei der befohlene Wert der Verringerung der Leistung kleiner oder gleich dem berechneten Maximalwert der Verringerung der Leistung ist und die ausgewählte Dauer kleiner oder gleich einer berechneten Maximaldauer der Verringerung der Leistung ist, wobei der Befehl (79) von dem Netzbetreiber (62) gesendet wird.

## Claims

1. A method for regulating the power consumed on an electric grid (10), the electric grid being able to supply a plurality of consumers (20) with electric current, preselected consumers (42, 44, 46, 48, 50, 52) being able to accept a predetermined decrease in power over a predetermined time range,
**characterized in that** it comprises the following steps:
- the transmission (102) to a control entity (60), regularly and by each preselected consumer (42, 44, 46, 48, 50, 52), of a message (M1) containing the consumed power of said preselected consumer, the duration between two successive message (M1) transmissions for a given consumer (42, 44, 46, 48, 50, 52) being less than 1 hour, preferably less than 10 minutes, still more preferably less than 1 minute,
- the computation (104), by the control entity (60), of a maximum power reduction value for all of the preselected consumers (42, 44, 46, 48, 50, 52) and a maximum duration of that power reduction, said maximum value being computed based on the received consumed power values for each preselected consumer,
- the transmission (106), by the control entity (60) and to a grid manager (62), of the maximum computed power reduction value and duration,
- the sending (108), by the grid manager (62) to the control entity (60), of a command order (79) for a power reduction (42, 44, 46, 48, 50, 52) for a selected duration, the value of the commanded power reduction being less than or equal to the maximum computed power reduction value and the selected duration being less than or equal to the maximum computed power reduction duration.

2. The method according to claim 1, **characterized in that** the control entity (60) is separate from the grid manager (62), the control entity (60) preferably being capable of communicating with the grid manager (62) via the Internet (69).

3. The method according to one of the preceding claims, **characterized in that**:
- during the computation step (104), the control entity computes a minimum power reduction duration,
- during the transmission step (106), said minimum duration is transmitted to the grid manager (62),
- and **in that** during the sending step (108), the selected duration is comprised between the computed minimum and maximum durations of the power reduction.

4. The method according to one of the preceding claims, **characterized in that**, during the transmission step (102), the transmitted consumed power is an instantaneous or averaged power.

5. The method according to one of the preceding claims, **characterized in that** the command order (79) for the power reduction (42, 44, 46, 48, 50, 52) is carried out by the control entity (60) as of receipt of that order, and **in that** the time frame between the sending of the order (79) and the power reduction for the preselected consumers is less than 1 minute, preferably less than 30 seconds, still more preferably less than 5 seconds.

6. The method according to one of the preceding claims, **characterized in that** the electric grid (10) is able to power a plurality of distinct geographic zones (40A, 40B, 40C), and the preselected consumers (42, 44, 46, 48, 50, 52) are grouped together by geographic zone (40A, 40B, 40C),
**in that**, during the computation step (104), the maximum power reduction value and duration are computed for each of the geographic zones (40A, 40B, 40C), and
**in that**, during the step (108) for sending the command order (79), the command order (79) of the power reduction is specific to one or more geographic zones (40A, 40B, 40C).

7. The method according to claim 6, **characterized in that**, during the computation step (104), the control entity (60) carries out the following steps:
a) processing (104a) the messages transmitted by each preselected consumer,
b) verifying (104b) that the power reduction offered by the preselected consumers (42, 44, 46, 48, 50, 52) is greater than or equal to a predetermined power reduction value for each geographic zone (40A, 40B, 40C),
c) activating (104c) an alert signal on a terminal of the control entity and increasing the number of preselected consumers for a given geographic zone (42, 44, 46, 48, 50, 52) if the power reduction offered by the consumers previously preselected for said geographic zone (42, 44, 46, 48, 50, 52) is less than the predetermined power reduction value, then returning to the verification step (104b),
d) generating (104d) a decision file (77) comprising the computed maximum power reduction value and duration.

8. The method according to claim 7, **characterized in that**, during the processing of the messages (M1) transmitted by each preselected consumer (42, 44, 46, 48, 50, 52), the control entity (60) computes, for each preselected consumer (42, 44, 46, 48, 50, 52), the power reduction and the duration of that power reduction, based on the consumed power value and the following parameters:
- the value of the predetermined power decrease
- the maximum number of power reductions authorized over a predetermined time period,
- the number of power reductions done since the beginning of a predetermined time period,
- the minimum time frame between two successive power reductions,
- the predetermined time range for the power reduction,
- the minimum time frame for implementing the power reduction,
- the consumer's availability schedule.

9. The method according to one of the preceding claims, **characterized in that** each preselected consumer (42, 44, 46, 48, 50, 52) comprises one or more sub-consumers and **in that** during the transmission step, the consumed power transmitted, via the message (M1), by each preselected consumer (42, 44, 46, 48, 50, 52) is equal to the sum of the powers consumed by the corresponding sub-consumers, and **in that** the message (M1) also comprises the power consumed by each sub-consumer.

10. The method according to claim 9, **characterized in that**:
- during the computation step (104), the control entity (60) computes, for each preselected consumer (42, 44, 46, 48, 50, 52), several power reduction values during a maximum duration, the computed values being equal to respective percentages of the maximum power reduction value and corresponding to power reductions consumed by each sub-consumer or groups of sub-consumers;
- during the transmission step (106), the control entity (60) transmits the different computed power reduction values and the corresponding maximum durations;
- during the sending step (108), the value of the commanded power reduction is equal to one of the values transmitted by the control entity (60).

11. The method according to one of the preceding claims, **characterized in that**, during the computation step (104), the time frame to compute the maximum power reduction value and duration, as of the reception of the consumed powers, transmitted by each preselected consumer (42, 44, 46, 48, 50, 52), is less than 1 minute.

12. The method according to one of the preceding claims, **characterized in that**, during the computation step (104), the computed maximum power reduction values and durations are anticipated values and durations, whereas the anticipated values and durations are transmitted to the grid manager daily and correspond to the forecasts, for a predetermined period, preferably for the following day, of the maximum power reduction values and for a maximum duration.

13. A control entity (60) for controlling the consumption of a plurality of preselected consumers (42, 44, 46, 48, 50, 52) of electric current in an electric grid (10), the electric grid (10) being able to power a plurality of consumers (20), the preselected consumers (42, 44, 46, 48, 50, 52) being able to accept a predetermined power decrease over a predetermined time range,
the control entity (60) being **characterized in that** it comprises:
- means (72) for receiving a message (M1) containing the power consumed by a preselected consumer (42, 44, 46, 48, 50, 52), each preselected consumer (42, 44, 46, 48, 50, 52) being able to transmit said message (M1) to the control entity (60) regularly, the duration between two successive message (M1) transmissions for a given consumer being less than 1 hour, preferably less than 10 minutes, still more preferably less than 1 minute,
- a member (75) for computing a maximum power reduction value for all of the preselected consumers (42, 44, 46, 48, 50, 52) and a maximum duration of that power reduction, said maximum value being computed as a function of the received power values consumed for each preselected consumer,
- means (76) for sending to a grid manager (62) of maximum computed power reduction value and duration,
- means (78) for receiving an order (79) commanding a power reduction for the preselected consumers (42, 44, 46, 48, 50, 52) for a selected duration, the value of the commanded power reduction being less than or equal to the maximum computed power reduction value and the selected duration being less than or equal to the computed maximum power reduction duration, the command order (79) being sent by the grid manager (62).
